(19) Europäisches Patentamt

European Patent Office

Office européen des brevets

(11) EP 1 514 839 A2

(12) EUROPEAN PATENT APPLICATION

(43) Date of publication:
16.03.2005 Bulletin 2005/11

(51) Int Cl.⁷: $C01B\ 3/06$

(21) Application number: 04021181.5

(22) Date of filing: 07.09.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 15.09.2003 US 662564

(71) Applicant: Celgard Inc.
Charlotte, South Carolina 28273 (US)

(72) Inventors:
• Shi, Lie
  Charlotte North Carolina 28270 (US)
• Schuster, Oliver
  58332 Schwelm (DE)

(74) Representative: Schröder, Richard
CPW GmbH
Kasinostrasse 19-21
42103 Wuppertal (DE)

(54) **Reactor and method for generating hydrogen from a metal hybride**

(57) The present invention provides for a method and a reactor for generating hydrogen from a metal hydride. The method includes the steps of: providing a fuel containing a metal hydride and water; catalyzing a reaction of the hydride and water by using a functional membrane system; and thereby generating hydrogen. The reactor for generating hydrogen includes a vessel, and a functional membrane system disposed within the vessel. The functional membrane system compartmentalizes the vessel into two chambers. One of the two chambers is a fuel chamber, and the other chamber is a hydrogen chamber. Fuel, containing a metal hydride and water, is introduced to the fuel chamber, where it undergoes a catalytic reaction to generate hydrogen. The generated hydrogen then passes through the functional membrane system into the hydrogen chamber, and exits the reactor via the hydrogen outlets. The functional membrane system includes a membrane and a catalyst. The catalyst is adapted to promote the removal of hydrogen from a metal hydride.

## Description

The present invention relates to a reactor and a method for generating hydrogen from a metal hydride.

Storage of hydrogen gas for use as a fuel in direct hydrogen fuel cells is an important consideration for the development and commercialization of such fuel cells. Some believe that storage of hydrogen gas, a very volatile gas, could limit the introduction of these fuel cells.

A fuel cell is an electrochemical energy conversion device that produces electricity by converting hydrogen and oxygen into water. As long as fuel and an oxidant are supplied continuously to the fuel cell, the fuel cell continues to operate.

Fuel cells generally consist of an anode, a cathode, and an electrolyte sandwiched in between the anode and the cathode. The anode and the cathode typically have catalyst to facilitate the oxidation and reduction reactions that produce the electricity. One type of a fuel cell is the polymer electrolyte membrane ("PEM") fuel cell, which is also known as proton exchange membrane fuel cell.

In a PEM fuel cell, hydrogen and oxygen are supplied to the cell from the outside sources. Hydrogen then enters the PEM fuel cell on the anode side, where it goes under a oxidation reaction to produce $H^+$ ions and electrons ($e^-$). The electrons are conducted through the anode to the external circuit (doing useful work such as turning a motor), and then return to the cathode side of the cell. Oxygen enters the cell on the cathode side, where it undergoes a reduction reaction to produce negatively charged oxygen atoms. Two positively charged hydrogen ion combine with a negatively charged oxygen atom and two electrons, which are returning to cathode from the external circuit, to produce a molecule of water.

If pure hydrogen is used as a fuel, fuel cells emit only heat and water as a byproduct. Since no other byproduct is produced, use of pure hydrogen as fuel, effectively could solve many of the environmental problems associated with fossil fuels.

As disclosed in U.S. Patent No. 5,840,329, and U.S. Patent Application Publication 2003/0009942 A1, one of the recognized methods to provide a continuous supply of hydrogen to fuel cells is known as "hydrogen on demand." Hydrogen on demand technology generates pure hydrogen from water and sodium borohydride, a derivative of borax.

The chemical reaction of the hydrogen gas generation is:

$$NaBH_4 + 2H_2O \rightarrow 4H_2 + NaBO_2 + Heat$$

The hydrogen, generated by the hydrogen on demand technology, can then be utilized to react with oxygen inside a fuel cell to generate electricity that can power a vehicle, a laptop computer, a mobile phone, a personal digital assistant ("PDA"), etc.

U.S. Patent Application Publication 2003/0009942 A1 discloses an arrangement for generating hydrogen gas utilizing internally generated differential pressure to transport fuel and spent fuel components without requiring an electrically powered fuel delivery.

U.S. Patent No. 5,840,329 ("Amendola") discloses an electroconversion cell in which borohydride is oxidized to generate borate and electrical current. Furthermore, Amendola discloses that borohydride may, in the alternative, be combined with water to generate hydrogen by reduction of water. The hydrogen may then be collected and transported to a hydrogen consumption point.

While each of the forgoing may have had a measured success in generating hydrogen utilizing "hydrogen on demand" technology, there is still a need for a method for generating hydrogen in a simple and more effective manner.

The present invention is a method and a reactor for generating hydrogen from a metal hydride. The method includes the steps of: providing a fuel containing a metal hydride and water; catalyzing a reaction of the hydride and water by using a functional membrane system; and thereby generating hydrogen. The reactor for generating hydrogen includes a vessel, and a functional membrane system disposed within the vessel. The functional membrane system compartmentalizes the vessel into two chambers. One of the two chambers is a fuel chamber, and the other chamber is a hydrogen chamber. Fuel, containing a metal hydride and water, is introduced to the fuel chamber, where it undergoes a catalytic reaction to generate hydrogen. The generated hydrogen then passes through the functional membrane system into the hydrogen chamber, and exits the reactor via the hydrogen outlets. The functional membrane system includes a membrane and a catalyst. The catalyst is adapted to promote the removal of hydrogen from a metal hydride.

For the purpose of illustrating the invention, there is shown in the drawings a form which is presently preferred; it being understood, however, that this invention is not limited to the precise arrangements and instrumentalities shown.

Fig. 1 is a schematic illustration of a reactor made according to the present invention.

Fig. 2 is a schematic illustration of a flat sheet functional membrane system.

Fig. 3 is a schematic illustration of a hollow fiber functional membrane system.

Fig. 4 is a schematic illustration of a flat sheet bi-layer functional membrane system.

Fig. 5 is a schematic illustration of a hollow fiber bi-layer functional membrane system.

Fig. 6 is a schematic illustration of a flat sheet multi-layer functional membrane system.

Fig. 7 is a schematic illustration of a hollow fiber multi-layer functional membrane system.

Fig. 8 is a schematic illustration of a reactor made according to the present invention utilizing a bundle of hollow fiber multi-layer functional membrane systems.

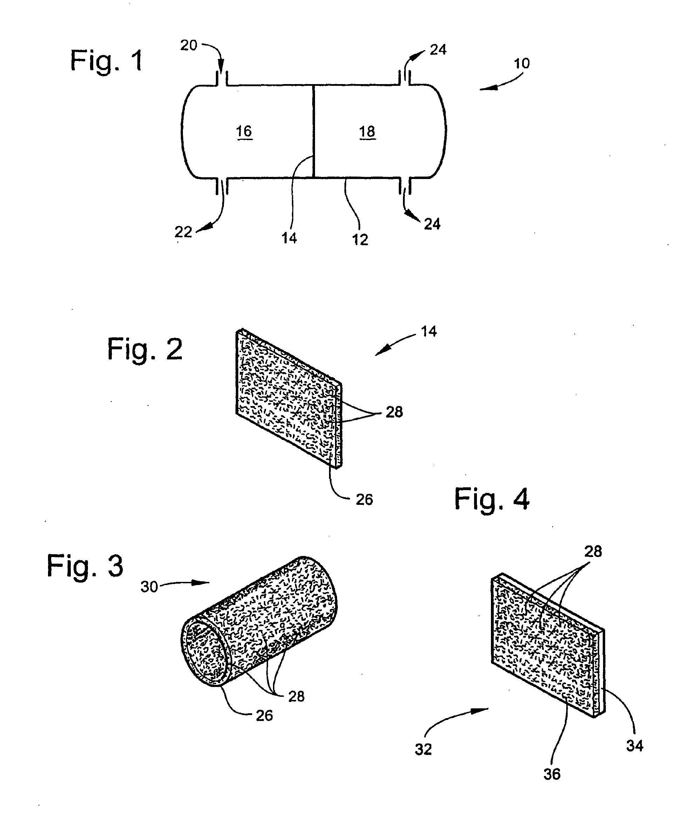

Referring to the drawings wherein like numerals indicate like elements, there is shown in Fig. 1 a preferred embodiment of the reactor 10. Reactor 10 includes a vessel 12, and a functional membrane system 14. Functional membrane system 14 is disposed within the vessel 12 to form two chambers: fuel chamber 16, and hydrogen chamber 18. Fuel chamber 16 includes a fuel inlet 20, and fuel outlet 22. Hydrogen chamber 14 includes hydrogen outlets 24.

Referring to Fig. 2, there is shown a flat sheet functional membrane system 14. Functional membrane system 14 includes a membrane 26 and catalyst 28.

Membrane 26 can be made of synthetic polymers, cellulose or synthetically modified cellulose. Synthetic polymers include, but are not limited to, polyethylene, polypropylene, polybutylene, poly (isobutylene), poly (methyl pentene), polysulfone, polyethersulfone, polyester, polyetherimide, polyacrylnitril, polyamide, polymethylmethacrylate (PMMA), ethylenevinyl alcohol, and fluorinated polyolefins. Membrane 26 is preferably microporous. Membrane 26 is also preferably a hydrophilic membrane, or a hydrophobic membrane with a hydrophilic coating. Membrane 26 may be an asymmetric membrane, or a symmetric membrane; furthermore, membrane 26 may also possess a skin or a coat. Membrane 26 permits only hydrogen to traverse the functional membrane system 14, and to enter into the hydrogen chamber 18. Furthermore, membrane 26 prevents fuel and $NaBO_2$, a product of the catalytic reaction of the fuel, from crossing the functional membrane system 14.

The catalyst 28, as discussed in greater detail below, is either coated or embedded on the surface of membrane 26, facing the fuel chamber 16. The catalyst 28 is adapted to promote the removal of hydrogen from metal hydride; when the catalyst 28 comes in direct contact with the fuel, it catalyzes the catalytic reaction of the fuel to generate hydrogen gas. The functional membrane system 14 contains a sufficient amount of the catalyst 28 to effectively catalyze the reaction of fuel to generate hydrogen gas.

Catalyst 28, as described in the U.S. Patent Application Publication 2003/0009942 A1, which is incorporated herein by reference, includes, but is not limited to, transitional metals, transitional metal borides, alloys of these materials, and mixtures thereof. The catalyst 28 is preferably a transitional metal. The transitional metal catalyst may include, but is not limited to, catalysts containing Group IS to Group VIIIB metals of the Periodic Table or compounds made from these metals. Examples of useful transitional metals and compounds include, but are not limited to, ruthenium, iron, cobalt, nickel, copper, manganese, rhodium, rhenium, platinum, palladium, chromium, silver, osmium, iridium, and compounds thereof. Ruthenium, cobalt, and compounds thereof, are most preferred transitional metal catalysts.

The functional membrane system 14 can be made by coating membrane 26 with catalyst 28. The coating can be achieved by numerous methods, including dip coating, spraying, deposition, plasma treating, or electrostatic or ionic bonding to a charged or partly charged membrane surface.

Functional membrane system 14 may also be a hollow fiber. Referring to Fig. 3, there is shown a hollow fiber functional membrane system 30. The hollow fiber functional membrane system 30 has a hydrophilic membrane 26 containing catalyst 28. Catalyst 28 may be on the inside (lumen) surface of the hollow fiber, the outside surface, or both.

Referring to Fig. 4, there is shown a flat sheet bi-layer functional membrane system 32. The bi-layer functional membrane system 32 includes a microporous diffusion layer 34, and a hydrophilic catalyst containing layer 36.

The microporous diffusion layer 34 is composed of a microporous membrane. The microporous diffusion layer 34 permits only hydrogen to traverse the bi-layer functional membrane system 32, and to enter into the hydrogen chamber 18. Furthermore, the microporous diffusion layer 34 prevents fuel and $NaBO_2$ from crossing the bi-layer functional membrane system 32.

The hydrophilic catalyst containing layer 36 is a hydrophilic membrane that contains catalyst 28, and, as discussed above, it can be created by coating a hydrophilic membrane with catalyst 28. The hydrophilic catalyst containing layer 36 faces the fuel chamber 16. The hydrophilic membrane facilitates the direct contact between the fuel and catalyst 28.

The bi-layer functional membrane system 32 can be, additionally, made by utilizing a lamination process to bond the microporous diffusion layer 34 to the hydrophilic catalyst containing layer 36. In the alternative, the bi-layer functional membrane system 32 can be made by utilizing a co-extrusion process, which can then be made microporous by a stretching technique also known as dry process, or a phase inversion separation or extraction process also known as wet process.

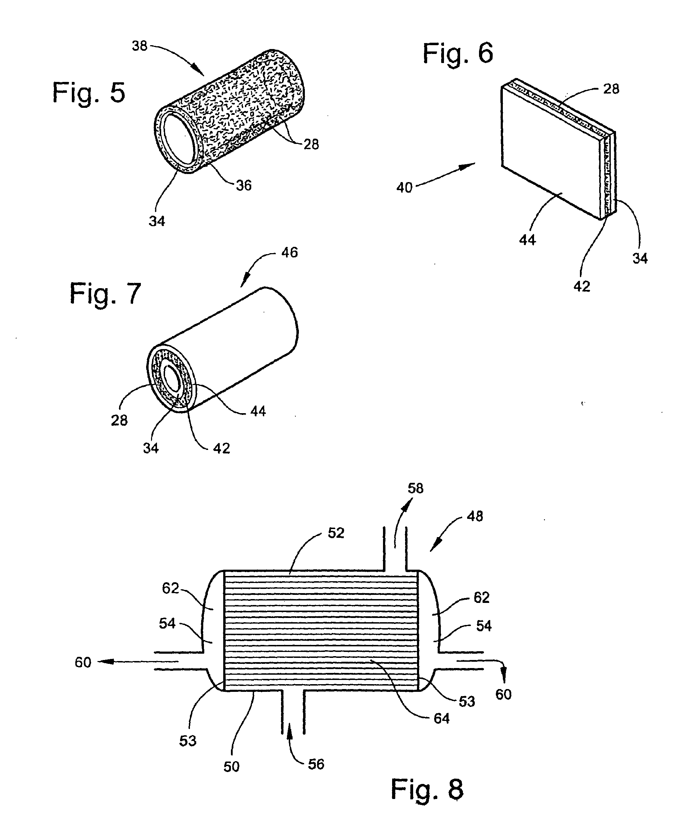

Referring to Fig. 5, there is shown a hollow fiber bi-layer functional membrane system 38. The hollow fiber bi-layer functional membrane system 38 includes a microporous diffusion layer 34, and a hydrophilic catalyst containing layer 36. In Fig. 5, microporous diffusion layer 34 is shown on the lumen side and the hydrophilic catalyst containing layer 36 is shown on the exterior; however, microporous diffusion layer 34 can be placed on the exterior side and the hydrophilic catalyst containing layer 36 on the lumen side.

Referring to Fig. 6, there is shown a flat sheet multi-layer functional membrane system 40. The multi-layer functional membrane system 40 includes a microporous diffusion layer 34, a metallic catalyst layer 42, and a hydrophilic layer 44. The placement of the layers as shown is not limiting, but other combinations, as would be apparent to a person skilled in the art, are possible.

The microporous diffusion layer 34 is composed of a microporous membrane. The microporous diffusion layer 34 permits only hydrogen to traverse the multi-layer functional membrane system 40, and to enter into the hydrogen chamber 18. Furthermore, the microporous diffusion layer 34 prevents fuel and $NaBO_2$ from crossing the multi-layer functional membrane system 40.

The hydrophilic layer 44 is composed of a microporous hydrophilic membrane or coating. The hydrophilic layer 44 faces the fuel chamber 16. The hydrophilic layer 44 facilitates the direct contact between the fuel and catalyst 28.

The metallic catalyst layer 42 is a porous membrane that contains catalyst 28. The metallic catalyst layer 42 can be made by coating a membrane with catalyst 28. The metallic catalyst layer 42 facilitates the catalytic reaction of the fuel to generate hydrogen gas.

The multi-layer functional membrane system 40 can be, additionally, made by a lamination process to bond the following layers to each other: the microporous diffusion layer 34, the metallic catalyst layer 42, and the hydrophilic layer 44. In the alternative, the multi-layer functional membrane system 40 can be made by a co-extrusion process, which can then be made microporous by a stretching technique also known as dry process, or a phase inversion separation or extraction process also known as wet process.

Referring to Fig. 7, there is shown a hollow fiber multi-layer functional membrane system 46. The hollow fiber multi-layer functional membrane system 46 includes a microporous diffusion layer 34, a metallic catalyst layer 42, and a hydrophilic layer 44. The placement of the layers as shown is not limiting, but other combinations, as would be apparent to a person skilled in the art, are possible.

Referring to Fig. 8, there is shown a preferred embodiment of a reactor 48. Reactor 48 includes a vessel 50, and a bundle of hollow fiber multi-layer functional membrane systems 64. Bundle of hollow fiber functional membrane systems 64, as used herein, refers to plurality of hollow fiber functional membrane systems. The bundle 64 is held in place within the vessel by tube sheets 53. The bundle of hollow fiber multi-layer functional membrane systems 64 is disposed within the vessel 50 to form two chambers: fuel chamber 52, and hydrogen chamber 54. Fuel chamber 52 preferably refers to the space defined by the interior wall of the vessel 50, the exterior surfaces of the hollow fibers, and between the tube sheets. Hydrogen chamber 54, as used herein, refers to the space defined by the lumens hollow fibers 46, and the headspaces 62. Fuel chamber 52 includes a fuel inlet 56, and fuel outlet 58. Hydrogen chamber 54 includes hydrogen outlets 60.

Fuel, as described in the U.S. Patent Application Publication 2003/0009942 A1, which is incorporated herein by reference, refers to a solution of a metal hydride and water. Preferably, fuel refers to a solution of a metal hydride, water, and stabilizing agent. Solution, as used herein, includes a liquid in which all the components are dissolved and/or a slurry in which some of the components are dissolved and some are undissolved solids.

Metal hydrides, as described in the U.S. Patent Application Publication 2003/0009942 A1, which is incorporated herein by reference, have the general formula $MBH_4$. M is an alkali metal selected from Group 1 (formerly Group IA) or Group 2 (formerly Group IIA) of the Periodic Table, examples of which include lithium, sodium, potassium, magnesium, or calcium; and, M in some cases may also be ammonium or organic groups. B is an element selected from the Group 13 (formerly Group IIIA) of the Periodic Table, examples of which include boron, aluminum and gallium. H is hydrogen. Examples of metal hydrides include, but are not limited to, $NaBH_4$, $LiBH_4$, $KBH_4$, $Mg(BH_4)_2$, $Ca(BH_4)_2$, $NH_4BH_4$, $(CH_3)_4NH_4BH_4$, $NaAlH_4$, $LiAlH_4$, $KAlH_4$, $NaGaH_4$, $LiGaH_4$, $KGaH_4$, and compounds thereof. The following borohydrides are preferred: sodium borohydride ($NaBH_4$), lithium borohydride ($LiBH_4$), potassium borohydride ($KBH_4$), ammonium borohydride ($NH_4BH_4$), tetraethyl ammonium borohydride ($(CH_3)_4NH_4BH_4$), quaternary borohydrides and compounds thereof.

Stabilizing agents, as described in the U.S. Patent Application Publication 2003/0009942 A1, which is incorporated herein by reference, include the corresponding hydroxide of the cation part of the metal hydride salt. For example, if sodium borohydride were used as the metal hydride salt, the corresponding stabilizing agent would be sodium hydroxide.

In operation, referring to Fig. 1, fuel enters the reactor 10 through the fuel inlet 20, and into the fuel chamber 16. Once fuel is in the fuel chamber 16, the hydrophilic membrane 26 facilitates the direct contact between the fuel and catalyst 28. Catalyst 28 catalyzes the reaction of the fuel to generate hydrogen. The reaction of the fuel to hydrogen gas can be shown as:

$$NaBH_4 + 2H_2O \rightarrow 4H_2 + NaBO_2 + Heat$$

The membrane 26 permits only the hydrogen to traverse the functional membrane system 14, and to enter into the hydrogen chamber 18. Furthermore, membrane 26 prevents fuel and $NaBO_2$, a product of the fuel reaction, from crossing the functional membrane system 14. Hydrogen that enters the hydrogen chamber 18 leaves the reactor 10 via the hydrogen outlets 24. The excess fuel and/or $NaBO_2$ leave the fuel chamber 16 via fuel outlet 22.

In a preferred operation, referring to Fig. 8, fuel enters the reactor 48 through the fuel inlet 56, and into the fuel chamber 52. Once fuel is in the fuel chamber 52, it comes in direct contact with the exterior layer of the hollow fibers in bundle 64. The hydrophilic layer 44 facilitates the direct contact of the fuel and the catalyst layer 42. The microporous diffusion layer 34 permits the hydrogen to pass through functional membrane system 46, where it enters the lumen of the hollow. Additionally, the microporous diffusion layer 34 prevents the fuel and/or $NaBO_2$ from passing through the functional membrane system 46. The hydrogen, which enters the lumens, travels to the headspaces 62, and leaves the reactor 10 via the hydrogen outlets 60. The excess fuel and/or $NaBO_2$ leave the fuel chamber 52 via fuel outlet 58.

The present invention may be embodied in other forms without departing from the spirit and the essential attributes thereof, and, accordingly, reference should be made to the appended claims, rather than to the foregoing specification, as indicated the scope of the invention.

**Claims**

1. A method for generating hydrogen from a metal hydride comprises the steps of:

   providing a fuel containing a metal hydride and water;
   catalyzing a reaction of the metal hydride and water by using a functional membrane system; and thereby
   generating hydrogen.

2. The method of Claim 1 wherein said functional membrane system comprises:

   a membrane; and
   a catalyst adapted to promote the removal of hydrogen from a metal hydride, said catalyst being contained in said membrane.

3. The method of Claim 2 wherein said catalyst being a transition metal catalyst.

4. The method of Claim 3 wherein said transition metal catalyst containing Group IB to Group VIIIB metals of the Periodic Table or compounds made thereof.

5. The method of Claim 4 wherein said transition metal catalyst being selected from ruthenium, cobalt, ruthenium compounds, cobalt compounds, and combinations thereof.

6. The method of Claim 2 wherein said method further comprises:

   a hydrophilic layer;

   a metallic catalyst layer; and
   a microporous diffusion layer.

7. The method of Claim 6 wherein said hydrophilic layer and said metallic catalyst layer comprise a single layer.

8. The method of Claim 7 wherein said single layer being a coating on said microporous diffusion layer.

9. The method of Claim 6 wherein said metallic catalyst layer and said microporous diffusion layer being a single layer.

10. The method of Claim 9 wherein said catalyst being embedded in said microporous diffusion layer.

11. The method of Claim 6 wherein said hydrophilic layer being coated on said metallic catalyst layer.

12. The method of Claim 6 wherein said metallic catalyst layer being affixed on said microporous diffusion layer by a process selected from the group consisting of vapor deposition, ionic bonding, and electrostatic bonding.

13. The method of Claim 2 wherein said membrane being a flat sheet or a hollow fiber.

14. The method of Claim 2 wherein said membrane being an asymmetric membrane.

15. The method of Claim 14 wherein said asymmetric membrane having a skin.

16. The method of Claim 2 wherein said functional membrane system further comprises a plurality of functional membrane systems.

17. The method of Claim 16 wherein said plurality of functional membrane systems comprises a bundle of hollow fibers.

18. A reactor for generating hydrogen comprises: a vessel; and a functional membrane system disposed within said vessel so that two chambers are formed within said vessel, one said chamber being a fuel chamber and said other chamber being a hydrogen chamber, whereby when a fuel containing a metal hydride and water are introduced to said fuel chamber, said fuel being catalytically reacted to form hydrogen and said hydrogen passing through said functional membrane system to said hydrogen chamber.

19. The reactor of Claim 18 wherein said functional membrane system further comprises a bundle of hollow fiber functional membrane systems.

**20.** The reactor of Claim 18 wherein said functional membrane system comprises:

a membrane; and
a catalyst adapted to promote the removal of hydrogen from a metal hydride, said catalyst being contained in said membrane.

**21.** The reactor of Claim 20 wherein said catalyst being a transition metal catalyst.

**22.** The reactor of Claim 21 wherein said transition metal catalyst containing Group IB to Group VIIIB metals of the Periodic Table or compounds made thereof.

**23.** The reactor of Claim 22 wherein said transition metal catalyst being selected from ruthenium, cobalt, ruthenium compounds, cobalt compounds, and combinations thereof.

**24.** The reactor of Claim 20 further comprises:

a hydrophilic layer;
a metallic catalyst layer; and
a microporous diffusion layer.

**25.** The reactor of Claim 24 wherein said hydrophilic layer and said metallic catalyst layer comprise a single layer.

**26.** The reactor of Claim 25 wherein said single layer being a coating on said microporous diffusion layer.

**27.** The reactor of Claim 24 wherein said metallic catalyst layer and said microporous diffusion layer being a single layer.

**28.** The reactor of Claim 27 wherein said catalyst being embedded in aid microporous diffusion layer.

**29.** The reactor of Claim 24 wherein said hydrophilic layer being coated on said metallic catalyst layer.

**30.** The reactor of Claim 24 wherein said metallic catalyst layer being affixed on said microporous diffusion layer by a process selected from the group consisting of vapor deposition, ionic bonding, and electrostatic bonding.

**31.** The reactor of Claim 20 wherein said membrane being a flat sheet or a hollow fiber.

**32.** The reactor of Claim 20 wherein said membrane being an asymmetric membrane.

**33.** The reactor of Claim 32 wherein said asymmetric membrane having a skin.

**34.** The functional membrane system of Claim 20 wherein said functional membrane system further comprises a plurality of functional membrane systems.

**35.** The functional membrane system of Claim 34 wherein said plurality of functional membrane systems comprises a bundle of hollow fibers.

**36.** A functional membrane system comprises:

a membrane; and
a catalyst adapted to promote the removal of hydrogen from a metal hydride, said catalyst being contained in said membrane.

**37.** The functional membrane system of Claim 36 wherein said catalyst being a transition metal catalyst.

**38.** The functional membrane system of Claim 37 wherein said transition metal catalyst containing Group IB to Group VIIIB metals of the Periodic Table or compounds made thereof.

**39.** The functional membrane system of Claim 38 wherein said transition metal catalyst being selected from ruthenium, cobalt, ruthenium compounds, cobalt compounds, and combinations thereof.

**40.** The functional membrane system of Claim 36 further comprises:

a hydrophilic layer;
a metallic catalyst layer; and
a microporous diffusion layer.

**41.** The functional membrane system of Claim 40 wherein said hydrophilic layer and said metallic catalyst layer comprise a single layer.

**42.** The functional membrane system of Claim 41 wherein said single layer being a coating on said microporous diffusion layer.

**43.** The functional membrane system of Claim 40 wherein said metallic catalyst layer and said microporous diffusion layer being a single layer.

**44.** The functional membrane system of Claim 43 wherein said catalyst being embedded in said microporous diffusion layer.

**45.** The functional membrane system of Claim 40 wherein said hydrophilic layer being coated on said metallic catalyst layer.

**46.** The functional membrane system of Claim 40 wherein said metallic catalyst layer being affixed on said microporous diffusion layer by a process selected from the group consisting of vapor deposition, ionic bonding, and electrostatic bonding.

47. The functional membrane system of Claim 36 wherein said membrane being a flat sheet or a hollow fiber.

48. The functional membrane system of Claim 36 wherein said membrane being an asymmetric membrane.

49. The functional membrane system of Claim 48 wherein said asymmetric membrane having a skin.

50. The functional membrane system of Claim 36 wherein said functional membrane system further comprises a plurality of functional membrane systems.

51. The functional membrane system of Claim 50 wherein said plurality of functional membrane systems comprises a bundle of hollow fibers.

Fig. 1

Fig. 2

Fig. 4

Fig. 3

Fig. 5

Fig. 6

Fig. 7

Fig. 8